# EUROPÄISCHE PATENTSCHRIFT

(11) **EP 1 674 752 B1**
(45) Veröffentlichungstag und Bekanntmachung des Hinweises auf die Patenterteilung: **01.10.2008**
(21) Anmeldenummer: 04030595.5
(22) Anmeldetag: 23.12.2004
(51) Int. Cl.: F16D 35/00, F16D 35/02, F01P 7/04

(54) **Viskosekupplung**
Viscous fluid clutch
Embrayage visqueux

(43) Veröffentlichungstag der Anmeldung: 28.06.2006
(73) Patentinhaber: BorgWarner, Inc., Auburn Hills, MI 48326-2872 (US)
(72) Erfinder: Tilly, Christian, 88690 Uhldingen-Mühlhofen (DE)
(74) Vertreter: Kügele, Bernhard

(56) Entgegenhaltungen:
- DE-A1- 19 932 359
- US-A- 4 257 501
- US-B1- 6 247 567
- PATENT ABSTRACTS OF JAPAN Bd. 010, Nr. 349 (M-538), 26. November 1986 (1986-11-26) -& JP 61 149623 A (TOYOTA CENTRAL RES & DEV LAB INC), 8. Juli 1986 (1986-07-08)

## Beschreibung

Die vorliegende Erfindung betrifft eine Viskosekupplung nach dem Oberbegriff des Anspruchs 1.

Es sind Viskosekupplungen verschiedenster Bauarten bekannt, bei denen der Drehmomentübertragungsgrad durch Variierung des Drucks oder der Menge der zwischen den Scherungsflächen der beiden Rotationselements befindlichen zähen Flüssigkeit, meistens Öl, variiert wird um dadurch ein grösseres oder kleineres Mitnahmevermögen des ersten rotierenden Elements bezüglich des zweiten, mitzunehmenden Elements zu erreichen.

Allen diesen Bauarten ist es jedoch gemeinsam, dass die Anpassung des Flüssigkeitsdrucks oder der Durchsatzmenge des ständig im Kreislauf befindlichen Öls an immer neue Erfordernisse im Betrieb Zeit braucht.

Ferner werden zur Druck- oder Durchsatzsteuerung Ventile benötigt die nicht nur Raum benötigen sondern auch teuer sind.

Ein anderer Nachteil derartiger bekannten Viskosekupplungen ist dass die erwünschten Sollwerte nicht eindeutig auf Grund vorgegebener Konditionen erreicht werden können und daher eine genaue Vorhersage der resultierenden Einstellungen nicht möglich ist.

Das japanische Patentabstrakt Nr. 61149623 offenbart eine Kühlwasserventilator-Ansteuerung, bei welcher der Drehmomentübertragungsgrad mittels relativer Bewegung der Übertragungsflächen gesteuert werden kann.

Die deutsche Offenlegungsschrift DE 199 32 359 sowie das amerikanische Patent US 6,247,567offenbaren eine mit Keilriemen angetriebene Kühlmittelpumpe, bzw. eine Fluid-Kupplung, bei der die Relativbewegungen der Übertragungsflächen magnetisch gesteuert werden.

Es ist Aufgabe der Erfindung, diese Nachteile zu vermeiden und eine Viskosekupplung zu schaffen, welche ferner leicht zusammenzubauen ist, bei der die hydraulischen Nebeneffekte und Unstetigkeiten vermindert sind und welche mit weniger und billigeren Einzelteilteilen zu realisieren ist.

### KURZBESCHREIBUNG DER ERFINDUNG

Diese Aufgaben werden entsprechend der Erfindung mittels der Merkmale des kennzeichnenden Teil des Anspruchs gelöst.

Eine Viskosekupplung dient zum einstellbaren Übermitteln eines Drehmoments eines ersten, angetriebenen Rotationselements auf ein zweites, in Rotation versetzbares Rotationselement, wobei das erste Element von einem Antrieb antreibbar ist und wobei das erste und das zweite Element je einen Scherungsbereich aufweisen, welche Scherungsbereiche aufeinander angepasste Scherungsflächen aufweisen, die in einem bestimmten Abstand zueinander angeordnet sind, und wobei eine viskose Flüssigkeit zwischen den Scherungsflächen eingebracht ist, mit Hilfe derer die Rotation des ersten Rotationselements auf das zweite Rotationselement übertragbar ist.

Bei einer Viskosekupplung entsprechend der Erfindung ist der axiale Abstand zwischen den Scherungsffächen mittels einer Verschiebeeinrichtung steuerbar, wodurch ein mehr oder weniger starkes Mitnahmevermögen des ersten Rotationselements bezüglich des zweiten Rotationselements erreicht wird.

Entsprechend einer Ausführungsart der Erfindung können die Scherungsflächen eine V-förmige Ringnut oder Berge und Täler bildende konzentrische Ringe mit V-förmigen Profil sein.

In dieser Ausführungsart ist es von Vorteil wenn die konzentrischen Ringe eines Rotationselements Durchmesser aufweisen, die von den Durchmessern der konzentrischen Ringe des anderen Rotationselements derart verschieden sind, dass die Berge der Ringe eines Rotationselements mit den Tälern der Ringe des anderen Rotationselements übereinstimmen.

Entsprechend einer Ausführungsart der Erfindung ist die Verschiebeeinrichtung zum Verändern des relativen axialen Abstands zwischen den beiden Rotationselementen magnetisch ansteuerbar ist.

Die magnetische Verschiebeeinrichtung kann einen Magnetkreis aufweisen der metallische Teile des ersten sowie des zweiten Rotationselements einschliesst.

Vorteilhafterweise weist der Magnetkreis einen zwischen einem Teil des ersten Rotationselements und einem Teil des zweiten Rotationselements liegenden magnetischen Spalt auf, und zwischen den beiden Rotationselementen kann eine axial wirkende Spiralfeder angeordnet sein.

Auf diese Weise kann die Spiralfeder in Richtung auf Spalterweiterung wirkend vorgesehen ist, wohingegen der Magnetkreis in Richtung Spaltverengung wirkend ansteuerbar ist.

Hierbei kann zur maximalen Drehmomentübertragung vom ersten auf das zweite Rotationselement in Abwesenheit eines Magnetfelds das zweite Rotationselement mittels der Spiralfeder axial an das erste Rotationselement gepresst werden.

In derselben Anordnung kann zur minimalen Drehmomentübertragung vom ersten auf das zweite Rotationselement durch Erzeugung eines Magnetfelds in einer Spule und dem damit einhergehenden Aufbau eines Magnetfelds im Magnetkreis eine die beiden Rotationselemente auseinanerziehenden Kraft erzeugt werden.

In einer Ausführungsart der Erfindung kann das zweite Rotationselement durch die Verschiebeeinrichtung mittels Pulsbetrieb der Magnetansteuerung abwechselnd voll in die eine und die andere Position gebracht werden, wobei eine pulslängengesteuerte Betriebsart erreicht wird, deren Tastverhältnis dem erwünschten Drehmomentübertragungsgrad entspricht.

Im Gegensatz hierzu kann aber durch lineare Ansteuerung der magnetischen Verschiebeeinrichtung und durch hierdurch erfolgendes Einstellen der erwünschten Spaltbreite zwischen erstem und zweitem Rotationselement, der erwünschte Drehmomentübertragungsgrad erreicht werden.

Eine erfindungsgemässe Viskosekupplung dient typischerweise zum Antrieb einer Vorrichtung deren Drehgeschwindigkeit unabhängig von der Drehgeschwindigkeit einer Rotationsquelle einzustellen ist.

### KURZBESCHREIBUNG DER ZEICHNUNG

Die Erfindung wird nun an Hand der Zeichnung näher erläutert, wobei
Fig. 1 einen Schnitt durch eine nicht erfindungsgemässe Viskosekupplung,
Fig. 2 einen detaillierten Ausschnitt des Scherungsbereichs dieser Viskosekupplung,
Fig. 3 ein Diagramm mit der Funktion Kraft-(Drehmoment)-Übertragung in Abhängigkeit des Abstandes der Scherungsflächen voneinander, und
Fig. 4 eine Ausführungsart der Erfindung zeigen.

### DETAIILIERTE BESCHREIBUNG DER ERFINDUNG

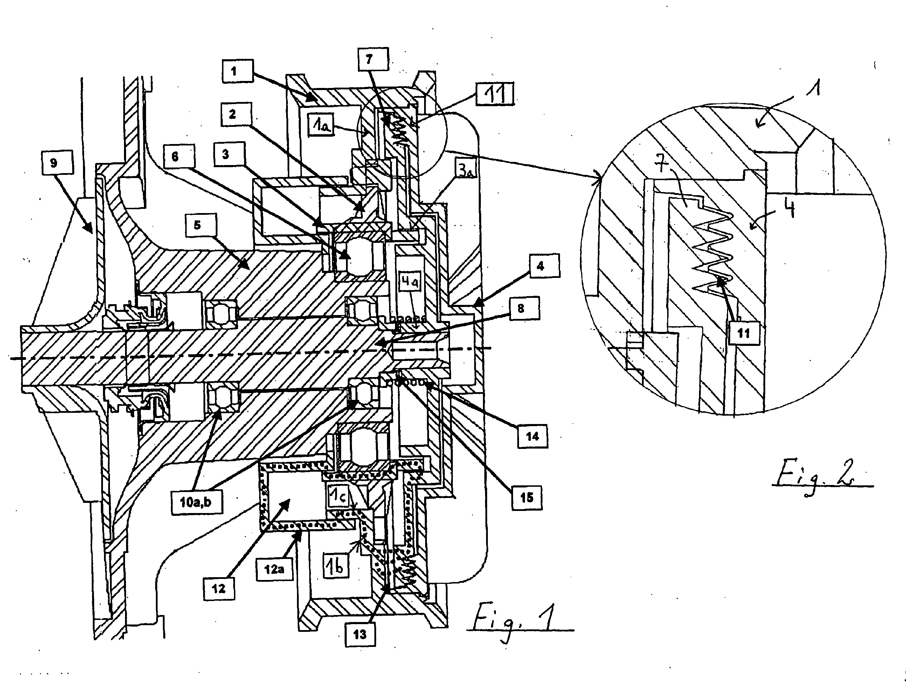

Die Fig. 1 zeigt eine erfindungsgemässe Viskosekupplung.

Die Viskosekupplung der Fig. 1 besitzt einen Eingangsteil bestehend aus einem mit einem nicht dargestellten Treibriemen angetriebenen Treibrad 1 das mit einem Deckel 4 der Viskosekupplung axial und rotativ fest verbunden ist, wobei das Treibrad ferromagnetisch ist.

Ferner weist der Eingangsteil einen nicht ferromagnetischen Ringkörper 2 auf, der mittels eines Kugellagers 6 oder Ähnlichem auf einem Gehäuse 5, beispielsweise einem Wasserpumpengehäuse sitzt.

Das Treibrad kann daher gegenüber dem Gehäuse 5 in Rotation versetz werden.

Zwischen einem radialen Plattenbereich 1a des Treibrades 1 und einem radial äusseren Randbereich des Deckels 4 ist eine Kupplungsscheibe 7 angeordnet, die axial auf einem Schaft 8 sitzt, der seinerseits mittels Kugellagern 10a, 10b axial innerhalb des Wasserpumpengehäuses 5 gelagert ist und bezüglich dieses Gehäuses drehbar ist.

An dem, der Kupplungsscheibe 7 gegenüberliegendem Ende des Schafts 8, ist dieser Schaft mit einem Pumpenrad 9 verbunden.

Das Treibrad 1 sowie der Deckel 4 sind am Gehäuse 5 axial fest, aber drehbar gelagert und können daher keine axiale Bewegung ausführen. Hingegen ist die Kupplungsscheibe 7 am Schaft 8 undrehbar aber, innerhalb gewisser Grenzen axial beweglich gelagert.

In einem radial äusseren Randbereich der Kupplungsscheibe 7 besitzt diese einen im Schnitt zick-zack förmig verlaufenden Bereich, der in Fig. 2 näher dargestellt ist.

Dieser zick-zack förmige Bereich liegt an einem gleichermassen zick-zack förmigen Bereich der Kupplungsplatte an, wobei dieses Anliegen jedoch unter Einhaltung eines gewissen Toleranzabstandes zu verstehen ist.

Innerhalb des Abstandes der zick-zack förmigen Bereiche von Kupplungsplatte und Deckel befindet sich ein zähflüssiges Silikonöl, das die Fähigkeit aufweist, bei Drehung des Deckels die Kupplungsscheibe in Rotation mitzunehmen, wobei diese Mitnahmefähigkeit zwischen einem einstellbaren unteren Wert, (z.B. 25%) und voll variieren kann.

Im Bereich zwischen der Kupplungsscheibe 7 und dem Deckel 4 befindet sich eine gewisse Menge einer Scherflüssigkeit, beispielsweise Silikonöl, doch muss das Öl den hierzu vorgesehenen Raum nicht vollständig ausfüllen. Bei Stillstand des Treibrades ist daher das Öl in einem Bereich der nicht unbedingt mit dem Scherungsbereich übereinstimmen muss. Sobald sich jedoch das Treibrad in Rotation setzt, wird das in Rotation versetzte Öl durch die Fliehkraft in den Scherungsbereich gebracht um dort seine Funktion zu erfüllen.

Dies ist vor allem bei Systemen der Fall, in denen die Variierung der Drehmomentübertragung durch Variation des Öldrucks oder der Menge Öl im Raum zwischen Deckel und Kupplungsscheibe erfolgt. Im System nach der vorliegenden Erfindung kann aber im Prinzip der Raum zwischen den Rotationselementen vollständig mit Scherflüssigkeit ausgefüllt sein.

Wenn der Abstand zwischen den zick-zack förmigen Flächen der Kupplungsscheibe und des Deckels so gross wird, dass das Mitnahmevermögen den unteren Wert, was unter Berücksichtigung der Reibung der Kupplungsteile bei einem Abstand von wenigen Millimetern bereits der Fall ist, so entspricht der Drehmomentübertragungsgrad zwischen Deckel und Kupplungsscheibe dem konstruktiv festgelegten Minimum und die Kupplungsscheibe rotiert erheblich langsamer als das Treibrad.

Wird der Abstand zwischen den zick-zack förmigen Flächen von Deckel und Kupplungsscheibe immer kleiner, so erreicht man den Punkt, an dem der Drehmomentübertragungsgrad fast 100% erreicht, obwohl noch immer ein minimaler Abstand zwischen den rotierenden Teilen vorhanden ist.

Die Vorrichtung besteht aus einer Magnetspule 12 mit Spulengehäuse 12a (aus Einfachheitsgründen ist nur das Spulengehäuse 12a dargestellt). Dieses Spulengehäuse 12a ist über einen engen Radialspalt magnetisch auf einer Innenschleife mit einem ferromagnetischen Fluss-Ring 3 verbunden der über einen weiteren engen Radialspalt 3a mit zylindrischen Bereichen der Kupplungsscheibe 7 magnetisch verbunden ist.

Von diesem Radialspalt 3a führt die Innenschleife des Magnetkreises weiter radial nach aussen bis in den Randbereich der Kupplungsscheibe, bzw. bis zu einem magnetischen Spalt 13.

Die Aussenschleife des Magnetkreises wird gebildet, ausgehend vom Magnetspulengehäuse 12a einem zylindrischen Teil 1c des Treibrades 1, einem hieran anschliessenden radialen Teil 1b und einem weiteren radialen Teil 1a des Treibrades bis hin zum magnetischen Spalt 13.

Im unteren Teil der Fig. 1 ist der Magnetkreis mit einer punktierten Linie angezeichnet, welche den oben angegebenen Komponenten der Viskosekupplung folgt.

Man erkennt aus Fig. 1, dass bei Anlegen eines elektrischen Stroms an die Spule 12 die Kupplungsscheibe 7 in Richtung auf eine Verengung des Spalts 13 gezogen wird, und zwar gegen die Kraft einer Spiralfeder 14, welche den Spalt 13 auseinanderhalten möchte.

Bei breitestem Spalt 13 liegen die zick-zack förmigen Flächen von Kupplungsscheibe und Deckel 4 praktisch aneinander an, so dass bei Fehlen eines Ansteuerstroms die Drehmomentübertragung fast 100%, bzw. maximal ist.

Wird die Magneteinrichtung angeregt, so verkleinert sich der Spalt 13 und gleichzeitig vergrössert sich der Abstand zwischen den zick-zack förmigen Flächen von Kupplungsscheibe und Deckel, so dass der Drehmomentübertragungsgrad abnimmt. Dies geschieht in Überwindung der Kraft der Spiralfeder 14 und setzt sich fort bis der zylindrische Zentralteil 4a des Deckels an einem Stopper 15 anstösst.

Der bisher verwendete Ausdruck "zick-zack förmig" bezieht sich auf einen Schnitt quer durch diese Flächen, und man kann aus Fig.1 ersehen, dass es sich hierbei um die radial aussen liegendenden Radialkbereiche von zwei Scheiben handelt, wobei die zick-zack förmigen Flächen sozusagen an den äusseren ringscheibenförmigen Radialbereichen angeordnet sind.

Die besagten Flächen, auch Scherflächen genannt, bilden ringförmige V-Nuten welche rund um die Ringscheibenbereiche von Kupplungsscheibe und Deckel laufen, wobei die Ringnuten Berge und Täler bilden und die Berge eines Rotationselements (Kupplungsscheibe) in die Täler des anderen Rotationselements (Deckel) eingreifen. Die einzelnen Nuten eines Elements haben daher unterschiedliche Durchmesser und die Durchmesser der Täler eines Rotationselements stimmen mit den Durchmessern der Berge des anderen Rotationselements überein.

Die Fig. 2 zeigt dies in vergrösserter Weise als Teilausschnitt der Fig. 1. Man erkennt auch in Fig. 2, dass die zick-zack förmigen Flächen der Kupplungsscheibe 7 scharfe Winkel zueinander bilden und sozusagen exakt zick-zack förmig sind, wohingegen die Flächen des Deckels 4 sowohl im Bereich der Berge als auch im Bereich der Täler etwa abgerundet sind.

Dies hat den Vorteil, dass die beiden Rotationselemente sich nicht vollständig aneinander legen können, wodurch etwaiges Kleben der Elements zueinander vermieden wird und ferner immer Raum vorhanden ist für die Präsenz von Scherflüssigkeit im Scherungsbereich 11.

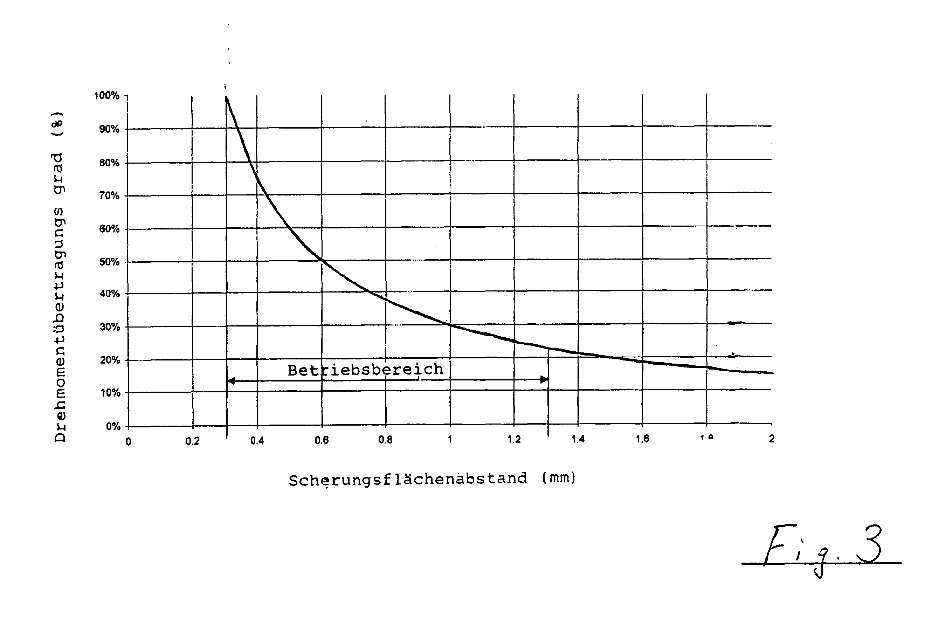

Die Fig. 3 zeigt ein Diagramm des Drehmomentübertragungsgrades in % in Abhängigkeit der Breite des Spalts 13. Man kann erkennen, dass das übertragene Drehmoment bei 0.3 mm Spaltbreite etwa 98% beträgt, wohingegen diese Kraft bei einer Spaltbreite von 1,3 mm bereits auf etwa 23% gefallen ist.

Die angegebenen Werte wurden auf Grund physikalischer Gesetzmässigkeiten errechnet.

Erfindungsgemäße Merkmale wurden mit Bezug auf Fig. 1 an Hand eines Ausführungsbeispiels beschrieben. In diesem Ausführungsbeispiel wurden die Scherflächen als zick-zack förmig gewählt, es ist jedoch möglich diese Flächen in irgend einer anderen Form zu gestalten, etwa meanderförmig mit rechteckigen Rillen oder irgend einer anderen beliebigen Form. Im Prinzip soll die Form der Scherflächen so gewählt werden dass eine möglichst grosse Realfläche auf kleinem Raum entsteht, doch kann für spezielle Verwendungen vorgesehen sein das Verhältnis von Realfläche zur geometrischen Fläche nicht besonders gross, oder sogar 1:1 zu wählen, was bedeuten würde, dass zwei glatte Scherflächen sich gegenüberliegen.

Erfindungsgemässe Viskosekupplungen können für eine Wasserpumpe, aber auch für viele anderen Zwecke eingesetzt werden und müssen nicht unbedingt mit der anzutreibenden Komponente integriert sein, wenngleich dies im Fahrzeugbau vorteilhaft ist.

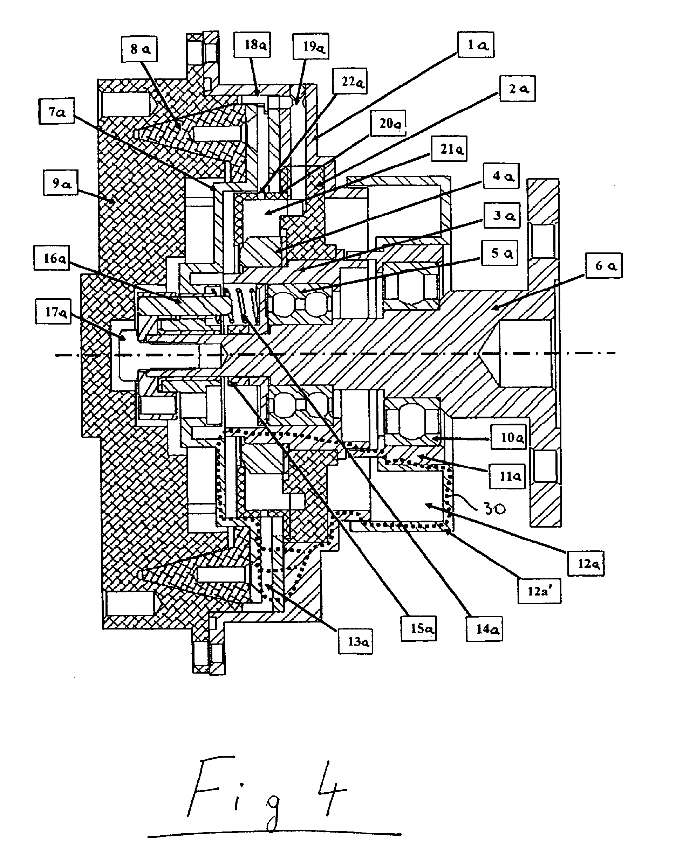

Die Fig. 4 zeigt eine Ausführungsart der Erfindung, welche beispielsweise für einen Ventilatorantrieb verwendet werden kann.

Hierzu zeigt die Fig. 4 eine Viskosekupplung mit einer Antriebsanordnung und einer angetriebenen Anordnung.

Die Antriebsanordnung umfasst einen von einem Motorschaft oder einem Keilriemen angetriebenen Deckel 9a, ein Gehäuse 1a, einen Körper 2a mit einem Flussring 3a.

Die angetriebene Anordnung umfasst einen Rotor 7, den Rotorbelag 8a, und den Schaft 6a, an dem beispielsweise ein Ventilator montiert sein kann, dessen Drehzahl variiert werden soll.

Die angetriebene Anordnung ist mittels eines Lagers 10a innerhalb der Antriebsanordnung gelagert.

Zwischen dem Deckel 9aund dem Rororbelag 8a ist ein Drehmomentübertragungsbereich definiert., der hier im Schnitt konisch ausgeführt ist, aber irgendwelche andere Formen annehmen kann, die zu diesem Zweck bekannt sind.

Wie in der Fig. 1, ist auch hier eine sehr enge Toleranz zwischen den relativ zueinander drehbaren Flächen eingestellt, und der Zwischenraum enthält ein hochviskoses Scherungsöl.

Wenn die Antriebsanordnung in Rotation versetzt wird, wird das Scherungsöl durch die Zentrifugalkraft in den radial aussen liegenden Bereich des Drehmomentübertragungsbereichs geschleudert, wodurch hier die Drehmomentübertragung verstärkt wird.

Das übertragbare Drehmoment ist von dem Abstand der Rotationsflächen zueinander abhängig.

Der Rotor 7a kann vom Deckel 9a axial wegbewegt werden um diesen Abstand zu vergrössern, und hiermit das übertragene Drehmoment schlagartig zu verkeinern.

Dies wird dadurch erreicht, dass der Rotor 7a mittels einer magnetischen Anordnung gegen die Kraft einer Feder 14a axial vom Deckel 9 weggezogen wird.

Zu diesem Zweck ist ein magnetischer Kreis gebildet, der die folgenden Teile umfasst: eine Spule 12a mit einem Spulengehäuse 12a', den Flussring 3a den radialen, mittleren und äusseren Teil des Rotors 7a, sowie einen Teil des Gehäuses 1a.

Der Magnetkreis ist in Fig. 4 als punktierte Linie 30angedeutet.

Zwischen dem radial äusseren Teil des Rotors 7a und dem diesem axial benachbarten Teil des Gehäuses 1a ist ein magnetischer Spalt 13a gebildet, der sich bei Anlegen eines elektrischen Stroms durch die Spule 12a zu verkleinern sucht. Hierdurch wird der Rotor axial, in der Zeichnung nach rechts, vom Deckel weggezogen, wodurch sich der Spalt im Drehmomentübertragungsbereich vergrössert, und hierdurch die angetriebene Anordnung von der Antriebsanordnung graduell entkuppelt wird.

Die Charakteristik von Spulenstrom und Drehmomentübertragungsgrad kann dabei verschieden gewählt werden. Beispielsweise kann die Anordnung so ausgelegt werden, dass der Drehmomentübertragungsgrad linear mit dem Spulenstrom variiert.

Es ist aber auch möglich, den Spulenstrom so stark zu wählen, dass bei seinem Anlegen der Rotor 7a sofort in seine vom Deckel 9a maximal entfernte Stellung springt, und der Spulenstrom entsprechend getaktet wird, um eine mittlere Stellung des Rotors 7a zu erhalten, die mit dem Taktverhältnis des Spulenstroms variiert.

Hierzu weist die Kupplung einen Stopper 15a auf, der die vom Deckel maximal entfernte Stellung des Rotors 7a definiert.

Ferner weist die Kupplung einen Abstreifer 18a auf, der das Scherungsöl im radialen Aussenbereich des Rotors 7a von dessen Rückseite abstreift.

Je weiter der Rotor, in der Zeichnung, nach rechts rückt, desto stärker wird das Abstreifvermögen des Abstreifers 18A.

Im Magnetspalt 13a, radial innen, sind mehrere Löcher in einem achsparallelen Bereich 20a des Körpers 2a vorgesehen, welche dem Durchgang des Scherungsöls zwischen dem Magnetspalt 13a und einem Reservoir 21 a dienen.

Wenn der Rotor durch die Magnetkraft axial vom Deckel weg gezogen wird, so verschliesst der radial äussere Teil de Rotors die Löcher 22a, wobei einerseits durch die stärkere Abstreifwirkung der Abstreifer und andererseits durch den graduellen Verschluss der Löcher 22a das Scherungsöl verstärkt, in bekannter Weise in das Reservoir 21 a geführt wird, sodass der Drehmomentübertragungsbereich noch zusätzlich durch verstärkten Abgang von Scherungsöl in Richtung Entkupplung geführt wird.

Das Prinzip der in Fig.4 gezeigte Ausführungsart einer Viskosekupplung kann in beiden Richtungen eingesetzt werden, wobei Antriebs- bzw. angetriebene Anordnung vertauscht werden. In diesem Fall wird der Ventilator am Deckel 9a befestigt und der Schaft 6a wird von einem Keilriemen oder einem Motorschaft angetrieben.

Es ist auch denkbar, als den axial beweglichen Teil nicht den Rotor 7a, sondern eine Antriebsscheibe zu verschieben. Der Rotor selbst bleibt dabei axial fest, und wenn die Antriebsscheibe axial bewegt wird, wird die Toleranz im Scherungsbereich vergrössert ohne den Abstand zwischen Rotor und Gehäuse zu verkleinern, wie dies in Fig. 4 der Fall ist.

Die Ausführungsart nach Fig. 4 bzw. die weiteren nur angedeuteten Varianten haben den Vorteil, dass die Kupplung sehr schnell und zwar insbesondere bei kleinen Geschwindigkeiten, regiert. Weitere Vorteile sind, dass der Ventilmechanismus in die bewegliche Rotorplatte integriert werden kann, dass eine Abstreiferkontrolle vorhanden ist, dass verhältnismässig wenig Einzelteile notwendig sind und dass die Kupplung leicht zusammen zu bauen ist.

## Patentansprüche

1. Viskosekupplung zum einstellbaren Übermitteln eines Drehmoments eines ersten, angetriebenen Rotationselements (1) auf ein zweites, in Rotation versetzbares Rotationselement (7), wobei das erste Rotationselement (1) von einem Antrieb antreibbar ist und wobei das erste und das zweite Rotationselement je einen Scherungsbereich (11) aufweisen, welche Scherungsbereiche aufeinander angepasste Scheruhgsflächen aufweisen, die im Abstand zueinander angeordnet sind und wobei eine viskose Flüssigkeit zwischen den Scherungsflächen eingebracht ist, mit Hilfe derer die Rotation des ersten Rotationselements (1) auf das zweite Rotationselement (7) übertragbar ist, und dass der Abstand zwischen den Scherungsflächen mittels einer Verschiebevorrichtung (12, 12a) steuerbar ist, **dadurch gekennzeichnet, dass** das zweite Rotationselement (7) bei einer Verschiebung in Richtung auf Verkleinerung der Drehmomentübertragung Löcher (22a) verschliesst, wodurch die Viskosekupplung noch weiter in Richtung Entkupplung bringbar ist.

2. Viskosekupplung nach Anspruch 1, **dadurch gekennzeichnet, dass** im radialen Aussenbereich des Rotors (7a) eine Abstreifvorrichtung (18a) vorgesehen ist, mit deren Hilfe bei einer Verschiebung dess Rotors (7a) in Richtung auf Verkleinerung der Drehmomentübertragung eine Verstärkung des Abgangs von Scherflüssigkeit aus dem Scherungsbereich, und damit eine verstärkte Entkupplung erreicht wird.

3. Viskosekupplung nach Anspruch 1 order 2, **dadurch gekennzeichnet, dass** der axiale Abstand zwischen den Scherungsftächen mittels einer Verschiebeeinrichtung (12,12a) steuerbar ist.

4. Viskosekupplung nach Anspruch 1,2 order 3, **dadurch gekennzeichnet, dass** die Scherungsflächen zumindest eine V-förmige Ringnut oder Berge und Täler bildende konzentrische Ringe mit V-förmigen Profil sind.

5. Viskosekupplung nach Anspruch 4, **dadurch gekennzeichnet, dass** die konzentrischen Ringe eines Rotationselements (1) Durchmesser aufweisen, die von den Durchmessern der konzentrischen Ringe des anderen Rotationselements (7) derart verschieden sind, dass die Berge der Ringe eines Rotationselements mit den Tälern der Ringe des anderen Rotationselements übereinstimmen.

6. Viskosekupplung nach einem der Ansprüche 1-5, **dadurch gekennzeichnet, dass** die Verschiebeeinrichtung(12, 12a) zum Verändern des relative Abstands zwischen den beiden Rotationselementen magnetisch ansteuerbar ist.

7. Viskosekupplung nach Anspruch 6, **dadurch gekennzeichnet, dass** sie eine magnetische Verschiebeeinrichtung aufweist deren Magnetkreis metallische Teile (1a, 1b,1c) des ersten sowie des zweiten Rotationselements einschliesst.

8. Viskosekupplung nach Anspruch 7, **dadurch gekennzeichnet, dass** der Magnetkreis einen zwischen einem Teil des ersten Rotationselements und einen Teil des zweiten Rotationselements liegenden magnetischen Spalt (13) aufweist, und dass zwischen den beiden Rotationselementen eine entgegenwirkende Feder (14) angeordnet ist.

9. Viskosekupplung nach Anspruch 8, **dadurch gekennzeichnet, dass** die Feder (14) eine Rückstellfeder ist die in Richtung auf Spalterverengung wirkend vorgesehen ist, wohingegen der Magnetkreis in Richtung Spalterweiterung wirkend ansteuerbar ist.

10. Viskosekupplung nach Anspruch 8 order 9, **dadurch gekennzeichnet, dass** zur maximalen Drehmomentübertragung vom ersten auf das zweite Rotationselement in Abwesenheit eines Magnetfelds das zweite Rotationselement mittels der Spiralfeder axial an das erste Rotationselement pressbar ist.

11. Viskosekupplung nach Anspruch 8 order 9, **dadurch gekennzeichnet, dass** zur minimalen Drehmomentübertragung vom ersten auf das zweite Rotationselement durch Erzeugung eines Magnetfelds in einer Spule (12) und dem damit einhergehenden Aufbau eines Magnetfelds im Magnetkreis eine die beiden Rotationselemente auseinanerziehenden Kraft erzeugbar ist.

12. Viskosekupplung nach einem der vorhergehenden Anspruche, **dadurch gekennzeichnet, dass** das zweite Rotationselement durch die Verschiebeeinrichtung mittels Pulsbetrieb der Magnetansteuerung abwechselnd voll in die eine und die andere Position bringbar ist und hierbei eine pulslängengesteuerte Betriebsart erreicht wird, deren Tastverhältnis dem erwünschten Drehmomentübertragungsgrad entspricht.

13. Viskosekupplung nach einem der Ansprüche 1-11, **dadurch gekennzeichnet, dass** durch lineare Ansteuerung der magnetischen Verschiebeeinrichtung durch Einstellen der erwünschten Spaltbreite zwischen erstem und zweitem Rotationselement, der erwünschte Drehmomentübertragungsgrad einstellbar ist.

14. Verwendung einer Viskosekupplung nach einem der Ansprüche 1-13, zum Antrieb einer Vorrichtung in Form einer Wasserpumpe oder eines Ventilators eines Fahrzeugs, deren Drehgeschwindigkeit unabhängig von der Drehgeschwindigkeit einer Rotationsquelle einzustellen ist.

## Claims

1. Viscose clutch for the adjustable transmission of a torque of a first, driven rotary element (1) to a second, rotatable rotary element (7), the first rotary element (1) being driveable by a drive, and the first and the second rotary element having in each case a shearing region (11), which shearing regions have shearing surfaces which are adapted to one another and which are arranged at a distance from one another, and a viscose fluid being introduced between the shearing surfaces, with the aid of which fluid the rotation of the first rotary element (1) can be transferred to the second rotary element (7), and the distance between the shearing surfaces being controllable by means of a displacement device (12, 12a), **characterized in that**, in the case of a displacement in the direction of a reduction in torque transfer, the second rotary element (7) closes holes (22a), with the result that the viscose clutch can be brought even further in the uncoupling direction.

2. Viscose clutch according to Claim 1, **characterized in that**, in the radial outer region of the rotor (7a), a stripping device (18a) is provided, with the aid of which, in the case of a displacement of the rotor (7a) in the direction of a reduction in the torque transfer, an increase in the discharge of shearing fluid out of the shearing region and, consequently, increased uncoupling are achieved.

3. Viscose clutch according to Claim 1 or 2, **characterized in that** the axial distance between the shearing surfaces is controllable by means of a displacement device (12, 12a).

4. Viscose clutch according to Claim 1, 2 or 3, **characterized in that** the shearing surfaces are at least one V-shaped annular groove or concentric rings of V-shaped profile which form peaks and valleys.

5. Viscose clutch according to Claim 4, **characterized in that** the concentric rings of one rotary element (1) have diameters which are different from the diameters of the concentric rings of the other rotary element (7), in such a way that the peaks of the rings of one rotary element coincide with the valleys of the rings of the other rotary element.

6. Viscose clutch according to one of Claims 1-5, **characterized in that** the displacement device (12, 12a) for varying the relative distance between the two rotary elements is activatable magnetically.

7. Viscose clutch according to Claim 6, **characterized in that** it has a magnetic displacement device, the magnetic circuit of which includes metallic parts (la, 1b, 1c) of the first and of the second rotary element.

8. Viscose clutch according to Claim 7, **characterized in that** the magnetic circuit has a magnetic gap (13) lying between a part of the first rotary element and a part of the second rotary element, and **in that** a counteracting spring (14) is arranged between the two rotary elements.

9. Viscose clutch according to Claim 8, **characterized in that** the spring (14) is a restoring spring which is provided to act in the direction of a gap narrowing, whereas the magnetic circuit is activatable to act in the direction of a gap widening.

10. Viscose, clutch according to Claim 8 or 9, **characterized in that**, for maximum torque transfer from the first to the second rotary element in the absence of a magnetic field, the second rotary element can be pressed axially onto the first rotary element by means of the helical spring.

11. Viscose clutch according to Claim 8 or 9, characterize in that, for minimum torque transmission from the first to the second rotary element, a force pulling the two rotary elements apart from one another, can be generated as a result of the generation of a magnetic field in a coil (12) and the accompanying build-up of a magnetic field in the magnetic circuit.

12. Viscose clutch according to one of the preceding claims, **characterized in that** the second rotary element can alternately be brought fully into one position and the other by the displacement device by means of a pulsed operation of the magnetic activation, and, in this case, a type of operation controlled by pulse length is achieved, the duty factor of which corresponds to the desired degree of torque transfer.

13. Viscose clutch according to one of Claims 1-11, **characterized in that** the desired degree of torque transfer can be set by means of the linear activation of the magnetic displacement device as a result of the setting of the desired gap width between the first and the second rotary element.

14. Use of a viscose clutch according to one of Claims 1-13 for driving a device in the form of a water pump or a fan of a vehicle, the rotational speed of which is to be set independently of the rotational speed of a rotation source.

## Revendications

1. Visco-coupleur pour la transmission réglable d'un couple d'un premier élément tournant (1) entraîné à un second élément tournant (7) pouvant être déporté en rotation, le premier élément tournant (1) pouvant être entraîné par un entraînement et les premier et second éléments tournants comportant respectivement une zone de cisaillement (11), lesdites zones de cisaillement comportant des surfaces de cisaillement disposées l'une sur l'autre à une certaine distance l'une de l'autre et un liquide visqueux étant amené entre les surfaces de cisaillement, à l'aide duquel la rotation du premier élément tournant (1) peut être transmise au second élément tournant (7), et l'écart entre les surfaces de cisaillement pouvant être commandé à l'aide d'un dispositif de déplacement (12, 12a), **caractérisé en ce que** le second élément tournant (7) obstrue, en cas de déplacement en direction d'une réduction de la transmission de couple, les trous (22a), le visco-coupleur pouvant encore être amené plus loin en direction d'un débrayage.

2. Visco-coupleur selon la revendication 1, **caractérisé en ce qu'**un dispositif de raclage (18a) est prévu dans la zone extérieure radiale du rotor (7a), ledit dispositif permettant, en cas de déplacement du rotor (7a) en direction d'une réduction de la transmission de couple, un renforcement de la sortie de liquide cisaillant hors de la zone de cisaillement, permettant ainsi de renforcer le débrayage.

3. Visco-coupleur selon la revendication 1 ou 2, **caractérisé en ce que** l'écartement axial entre les surfaces de cisaillement peut être commandé à l'aide d'un dispositif de déplacement (12, 12a).

4. Visco-coupleur selon la revendication 1, 2 ou 3, **caractérisé en ce que** les surfaces de cisaillement comportent au moins une rainure annulaire en V ou des creux et des bosses formant des bagues concentriques au profil en V.

5. Visco-coupleur selon la revendication 4, **caractérisé en ce que** les bagues concentriques d'un élément tournant (1) présentent un diamètre différent des diamètres des bagues concentriques de l'autre élément tournant (7) de façon à ce que les bosses des bagues d'un élément tournant coïncident avec les creux des bagues de l'autre élément tournant.

6. Visco-coupleur selon l'une quelconque des revendications 1 à 5, **caractérisé en ce que** le dispositif de déplacement (12, 12a) peut être commandé de façon magnétique pour modifier l'écartement relatif entre les deux éléments tournants.

7. Visco-coupleur selon la revendication 6, **caractérisé en ce qu'**il comporte un dispositif de déplacement magnétique dont le cercle magnétique comporte les parties métalliques (la, 1b, 1c) du premier ainsi que du second élément tournant.

8. Visco-coupleur selon la revendication 7, **caractérisé en ce que** le cercle magnétique comporte une fente (13) magnétique disposée entre une partie du premier élément tournant et une partie du second élément tournant et **en ce qu'**un ressort (14) à action contraire est disposé entre les deux éléments tournants.

9. Visco-coupleur selon la revendication 8, **caractérisé en ce que** le ressort (14) est un ressort de rapport dont l'action est prévue en direction d'un rétrécissement de la fente, le cercle magnétique pouvant quant à lui être commandé en vue d'un élargissement de la fente.

10. Visco-coupleur selon la revendication 8 ou 9, **caractérisé en ce que** pour une transmission de couple maximale du premier au second élément tournant en l'absence de champ magnétique, le second élément tournant peut être serré contre le premier élément tournant à l'aide du ressort à spirale.

11. Visco-coupleur selon la revendication 8 ou 9, **caractérisé en ce que** pour une transmission de couple minimale du premier au second élément tournant, une force écartant les deux éléments de rotation peut être générée en générant un champ magnétique dans la bobine (12) et dans la structure attenante d'un champ magnétique, dans le cercle magnétique.

12. Visco-coupleur selon l'une quelconque des revendications précédentes, **caractérisé en ce que** le second élément tournant peut être amené de façon alternée entièrement dans la première et dans l'autre position par le dispositif de déplacement au moyen d'un mode pulsé de la commande de l'aimant, permettant ainsi d'obtenir un mode de fonctionnement commandé par la longueur des impulsions, le rapport de contact correspondant alors au degré de transmission de couple souhaité.

13. Visco-coupleur selon l'une quelconque des revendications 1 à 11, **caractérisé en ce que** la commande linéaire du dispositif de déplacement magnétique permet de régler le degré de transmission de couple souhaité en ajustant la largeur de fente souhaitée entre le premier et le second élément tournant.

14. Utilisation d'un visco-coupleur selon l'une quelconque des revendications 1 à 13, pour l'entraînement d'un dispositif prenant la forme d'une pompe à eau ou d'un ventilateur de véhicule dont la vitesse de rotation peut être réglée indépendamment de la vitesse de rotation d'une source tournante.
